# EUROPEAN PATENT APPLICATION

(11) **EP 1 577 997 A2**
(43) Date of publication of application: **21.09.2005**
(21) Application number: 05101835.6
(22) Date of filing: 09.03.2005
(51) Int. Cl.: H02H 9/04, H02H 9/02

(54) **Protection circuit for dual voltage electrical distribution system**

(30) Priority: 15.03.2004 US 801241
(71) Applicant: TYCO Electronics Corporation, Middletown, Pennsylvania 17057 (US)
(72) Inventor: Toth, James, 94070, San Carlos (US)
(74) Representative: Johnstone, Douglas Ian

(57) **Abstract**

An electrical overvoltage protection circuit (60) in a dual voltage electrical distribution system (10) such as a motor vehicle includes a PTC device (80) in series between a low voltage source (46) and a low voltage distribution wire (72), and also a voltage limiting circuit element (82) such as a zener diode in thermal contact with the PTC device and connected across the low voltage distribution wire and a common electrical return path. The voltage limit is set to be below a high voltage and above the low voltage. When the low voltage distribution wire becomes cross-connected to a high voltage distribution wire (32), the voltage limiting circuit element conducts a large current and generates heat which is transferred to the PTC device which thereupon trips and limits current flow from the low voltage source to the high voltage load (42) via the cross-connected low voltage and high voltage distribution wires.

## Description

### BACKGROUND OF THE INVENTION

The present invention relates to electrical circuit protection arrangements, and more specifically, the present invention relates to an electrical protection circuit in a dual voltage electrical distribution system.

Although fuses, circuit breakers, and positive temperature coefficient (PTC) devices are employed to protect electrical circuits from overcurrent events, the situation becomes more complicated if the particular system contains circuits, which distribute energy at more than one voltage. In addition to the situation where a direct short occurs between a distribution path and the ground return, a lower voltage/higher current circuit must be protected against a crossover with a higher voltage/lower current distribution circuit.

One example of a dual-voltage electrical distribution system is presented in the motor vehicle field. Presently, the automotive industry is developing an electrical distribution system having a nominal battery potential of 36 volts (42 volts during alternator charging), in lieu of the presently ubiquitous 12 volt (14 volts while charging) vehicle electrical systems. The higher voltage standard will provide additional power with reduced current over smaller distribution wires to newly developed electrical components within the motor vehicle, such as electric steering, electric brakes, and suspension systems in addition to such known elements as window and seat warmers, door latch solenoids, window and seat motors, etc. Advantages of the 42 volt system are said to include reduced current; downsized wiring; reduced mass and volume; improved fuel efficiency; lower electrical system cost; lower vehicle noise, vibration and harshness; improved stability; and the ability to incorporate advanced technologies into the motor vehicle.

While the automotive industry desires to move to the 42 volt standard, it is not practical to make a complete switchover at once. Rather, at least for some time into the future, new motor vehicles will have a dual voltage electrical distribution system, in order to make use of existing components such as light bulbs. It is expected that incandescent lighting will remain at the old 12 volt standard because of bulb durability and light focusing issues.

When a motor vehicle is equipped with a dual voltage electrical distribution system, not only must the circuit protection system protect against shorts to ground, additional protection must be provided to protect against crossovers between the high voltage side and the low voltage side. Fuses have been proposed as a system to provide primary circuit protection for both high voltage and low voltage distribution circuit paths. Nonetheless, fuses may not be correctly sized to prevent catastrophic events, such as fire, in the event of a crossover. Crossovers can result from any number of events and conditions, but are most likely to occur as a result of vehicle collisions. As automakers have undertaken to make vehicles "collision resistant", they would naturally be expected to provide protection against fire in the event of a collision involving a dual voltage vehicle.

Use of polymeric positive temperature coefficient (PPTC) devices as protection devices within motor vehicles is known. Commonly assigned U.S. Patents Nos. 5,645,746 and 6,225,610 (both to Walsh), describe the application of PPTC devices in lieu of metal fuses. One known advantage is that PPTC protection devices are resettable and need not be physically accessed and replaced after tripping into the high resistance state, leading to more efficient and economical wiring distribution systems. The disclosures of the '746 and '610 patents are hereby incorporated herein by reference.

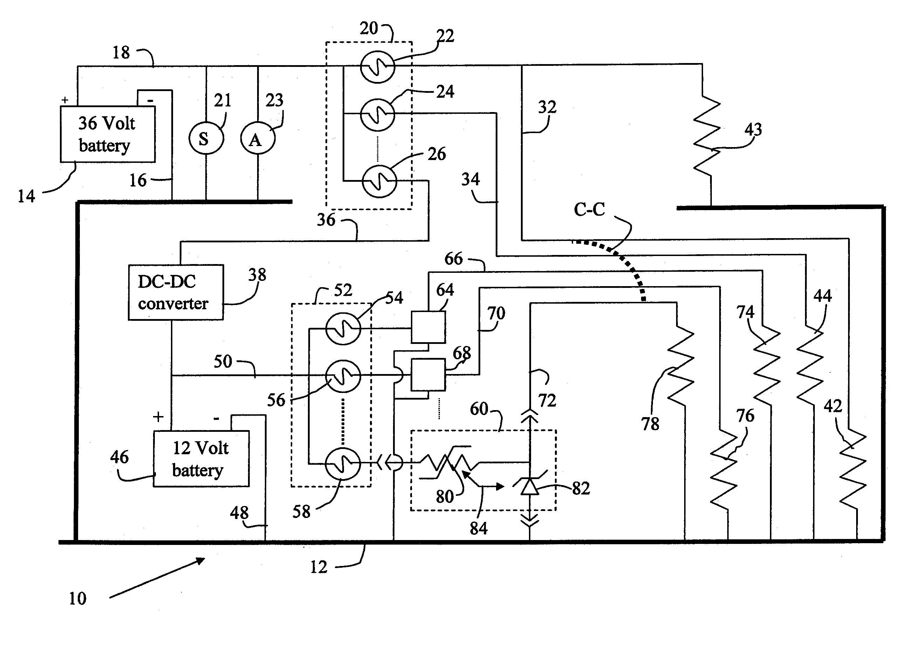

It is known in the power supply art to thermally couple a diode to a PPTC device, so that heat generated by dissipation in the diode may be transferred to, and thereby speed up tripping of the PPTC device. One example of the coupling of a diode to a PPTC device is found in the Figure 7 example of commonly assigned U.S. Patent No. 6,519,731 (Thomas et al.), the disclosure of which incorporated herein by reference.

While PPTC devices and diodes are a combination known in the prior art, these elements have not been heretofore combined to provide effective circuit protection against crossover in dual voltage electrical distribution systems.

### BRIEF SUMMARY OF THE INVENTION

A general object of the present invention is to provide an effective circuit protection arrangement against crossover in a dual voltage electrical distribution system.

Another object of the present invention is to combine a current-limiting device, such as a PPTC device, and a voltage-limiting device, such as a zener diode, in an arrangement providing circuit protection against crossover in a dual voltage electrical distribution system.

A further object of the present invention is to provide a protection circuit for protecting against crossover in a motor vehicle having a dual voltage distribution system.

In accordance with principles and aspects of the present invention, an electrical protection circuit is provided in a dual voltage electrical distribution system, such as, but not limited to, a motor vehicle. The electrical distribution system includes a common return path, such as including but not limited to a motor vehicle chassis, a first energy source supplying energy at a first voltage potential (such as but not limited to a 36 volt battery) to a first load via a first distribution wire, a second energy source supplying energy at a second voltage potential lower than said first voltage potential (such as but not limited to a 12 volt battery) to a second load via a second distribution wire in physical proximity with the first distribution wire. The protection circuit includes a current-limiting device (such as but not limited to a PTC device) in series between the second voltage source and the second distribution wire, and a voltage-limiting circuit element (such as but not limited to a zener diode) in thermal contact with the current-limiting device. The voltage-limiting circuit element is connected across the second distribution wire and the common return path, and it has a voltage limit set to be below said first voltage potential and above said second voltage potential. When the second distribution wire becomes cross-connected to the first distribution wire (as for example in a motor vehicle collision resulting in damage to the electrical distribution system), the voltage-limiting circuit element conducts a large current and generates heat which is transferred to the current-limiting device, and the current-limiting device thereupon switches from an untripped state to a tripped state thereby to limit to a non-hazardous level the current flow from the second energy source through wiring sized only to handle currents of the first energy source, and not higher currents of the second energy source.

In another aspect, the invention provides a module or device comprising an electrical protection circuit as described above, intended to protect a dual voltage distribution system from damage occurring from a cross-connection.

These and other objects, advantages, aspects and features of the present invention will be more fully understood and appreciated upon consideration of the detailed description of preferred embodiments presented in conjunction with the following drawing.

### BRIEF DESCRIPTION OF THE DRAWING

The single Figure is a high-level electrical circuit schematic and block diagram of a motor vehicle having a dual voltage electrical distribution system having a plurality of protection circuits in accordance with principles of the present invention.

### DETAILED DESCRIPTION OF THE INVENTION

A dual voltage electrical distribution system 10, of a motor vehicle for example, is illustrated in the schematic overview presented by the Figure. Therein, the distribution includes a voltage return path provided at least in part by a metal chassis 12 of the motor vehicle as is conventional. A high voltage (36 volt) battery 14 has, e.g., a negative terminal connected by a conductor 16 to chassis ground 12 and has a positive terminal connected by a conductor 18 to a high voltage fuse block 20. A high voltage starter motor 21 and a high voltage alternator 23 may be connected between the conductor 18 and the chassis 12. When the alternator 23 is active, the high voltage distribution system is rated at a nominal 42 volt maximum charging level.

The high voltage fuse block 20 includes a plurality of fuses, typically being of different current handling capacities, from e.g. 3 amps up to 55 amps or greater. Three fuses 22, 24 and 26 are shown; however, there may be a greater or lesser number of high voltage fuses at the high voltage fuse block 20. The fuse 22 is connected to and supplies energy via an insulated high voltage conductor wire 32 to a first high voltage load 42 and also to a second high voltage load 43, for example. The fuse 24 is connected to and supplies energy via an insulated high voltage conductor wire 34 to a third high voltage load 44; and the fuse 26 is connected to and supplies energy via an insulated high voltage conductor wire 36 to a fourth high voltage load, in this instance illustrated by a direct current to direct current (DC-DC) converter 38 for supplying charging current to a low voltage (12 volt) battery 46 at an appropriate charging voltage, such as 14 volts. In each instance the high voltage fuse 22, 24, or 26 is sized to protect the respective wire 32, 34 and 36 from undue heating and thermal hazard otherwise resulting from excessive current flow. The high voltage fuses 22, 24 and 26 are conventional metallic fuses, thermal fuses or circuit breakers, for example.

While the Figure includes the low voltage battery 46, in some systems, the low voltage supply may be provided entirely by an output voltage regulated converter system, such as the DC-DC switching converter 38.

In the present example the low voltage battery 46 has a negative terminal connected by a conductor 48 to the chassis return 12 and has a positive terminal connected by a conductor 50 to a charging output of the DC-DC converter 38 and to a low voltage fuse block 52. The low voltage fuse block 52 may include a plurality of low voltage fuses, such as fuses 54, 56 and 58, each having a current handling capability selected in relation to a particular low voltage load and conductor wire size leading to the particular load. While three low voltage fuses are shown, an actual fuse block may have a greater or lesser number of fuses. Since the voltage supplied by battery 46 is lower than the high voltage supply, for equivalent power output to a load higher current must be sourced, meaning that distribution wire diameters for the low voltage network tend to be larger than for the high voltage distribution network. The low voltage fuses 54, 56 and 58 are conventional metallic fuses, thermal fuses or circuit breakers, for example.

Preferably all of the low voltage circuits include a protection circuit in accordance with principles of the present invention. While three protection circuits 60, 64, and 68 are shown in the example illustrated in the Figure, only circuit 60 is illustrated in internal schematic circuit detail. It is therefore to be understood by those skilled in the art that other low voltage side protection circuits, such as circuits 64 and 68, have the same elements and circuit arrangement as shown for exemplary protection circuit 60.

The low voltage fuse 54 connects through the protection circuit 64 and via a low voltage insulated wire 66 to a low voltage load 74; the low voltage fuse 56 connects through the protection circuit 68 and via an insulated low voltage wire 70 to a low voltage load 76; and, the fuse 58 connects through the protection circuit 60 and via an insulated low voltage wire 72 to a low voltage load 78. The loads 42, 43, 44, 74, 76 and 78 may comprise any electrical elements found in a motor vehicle, such as incandescent lamps, small motors, solenoids, heating coils, pumps, etc. For instance, the load 42 may be a high efficiency, low mass, high voltage (42 volt) window motor in a left door of the vehicle while load 43 may be an equivalent window motor in a right door of the vehicle, and the load 78 may be a low voltage, high current incandescent lamp circuit. Whether or not the high voltage conductor wires 32-36 are dressed in cabling separate from the low voltage wires 66, 70 and 72, the high voltage wires and low voltage wires may be in close proximity of each other at any particular location in the motor vehicle.

A potentially very hazardous cross-connect, denoted by a heavy dashed line C-C can occur as a result of a motor vehicle crash impacting cabling including wire 32 and wire 72. If a crossover or cross-connect C-C occurs as shown by the dashed line in the Figure, sufficient current may flow initially from the high voltage distribution subsystem to the low voltage subsystem. Fuse 22 would ordinarily be sized to protect the wire 32 from excess current and may blow. However, even if fuse 22 blows, a higher level of current may flow from the low voltage source 46 through fuse 58 and larger diameter low voltage wire 72 into the smaller diameter high voltage wire 32, otherwise resulting in a potential thermal event (e.g. fire) at or near the site of the unwanted crossover or cross-connect C-C. The protection circuit 60 will prevent occurrence of such unwanted thermal event otherwise caused by cross-connect C-C. The other protection circuits 64 and 68 protect against other high voltage circuit to low voltage circuit cross-connect possibilities within the exemplary system 10. While only three protection circuits 60, 64 and 68 are shown in the example 10, many appropriately sized protection circuits may be employed in a practical application of a motor vehicle, for example.

The protection circuit 60 (and circuits 64 and 68) essentially comprises a PTC device 80 and a voltage limiting circuit element such as, but not limited to, a zener diode 82. The limit voltage of the device 82 is selected or set to be above the low voltage level (e.g. 14 volts) and lower than the high voltage level (e.g. lower than 42 volts). In this present example, the zener diode reverse avalanche breakdown voltage is preferably approximately 20 volts. The protection circuit 60 also includes an effective thermal conduction path 84 by which heat generated by the voltage limiting element 82 is transferred directly to the PTC device, as denoted by the double arrow line 84.

When a cross-connect C-C occurs between high voltage wire 32 and low voltage wire 72, as in the event of a vehicle collision, the voltage limiting device 82 begins to conduct and pass a large magnitude current from the high voltage wire 32 to the vehicle return path 12. The current level conducted should be sufficient eventually to trip or blow fuse 22; but, during the initial cross-connect episode, the voltage-limiting element 82 generates considerable heat. This heat is effectively transferred via the thermal path 84 to the current-limiting device 80 and accelerates its trip-mode of operation. Following tripping or blowout of the high voltage fuse 22, the zener diode ceases to operate, whereupon the current-limiting device 80 assumes a primary overcurrent protection role, by limiting current flow from the low voltage/high current source 46 through the smaller diameter high voltage wiring 32 to a safe level.

Most preferably, the current-limiting device 80 is a polymeric PTC (PPTC) device, such as Raychem PolySwitch™ RGE600 device made and supplied by Tyco Electronics Corporation, the assignee of the present invention. The PolySwitch™ RGE600 device is a leaded component and has a nominal trip current of 10.2 amperes and a nominal hold current of 6 amperes. Other PPTC devices, whether leaded or surface mounted, may be used for PTC device 80. The PTC device 80 is selected so that it will trip to its high resistance, current-limiting state when the trip current is reached. The PTC device 80 reaches its tripped state within a time period inversely related to the temperature of the PTC device 80. Since heat is being transferred from the voltage-limiting element 82 to the PTC device 80, the trip time is reduced and the PTC device 80 trips to its protection mode quickly, and well before a hazardous or catastrophic thermal event (e.g. fire) ensues. Once power (current flow) is removed from the PTC device 80 and the fault is cleared, the PTC device 80 cools and automatically resets itself to its low-resistance untripped state, as is known and appreciated in the art. In some systems the PTC device 80 may eliminate the need for its associated low voltage fuse 58, whereas in other systems, the fuse 58 may be provided for additional circuit protection. While PPTC devices are preferred as the current-limiting device 80 for use within each protection circuit, e.g. circuit 60, other thermally sensitive devices may be employed, such as ceramic PTC devices, thermal fuses, circuit breakers and the like. Also, PPTC devices may be used in place of the high voltage fuses 22, 24, and 26 to provide automatic reset features and advantages available with such devices.

While the zener diode 82 is presently preferred for providing the voltage-limiting element, other circuit elements, such as appropriately biased transistors, FETs, SCRs, triacs, and monolithic circuits such as power op-amps and voltage regulator circuits, can be employed and adapted to provide effective voltage limiting and high current flow at a voltage level intermediate between the low voltage level and the high voltage level. The current handling/power dissipation (heating) capacity of the voltage limiting element is established in relation to the current handling capabilities of the low voltage distribution circuit and wire size, and the physically proximate high voltage distribution circuit and wire, etc.

The protection circuits 60, 64 and 68 are most preferably formed as unitary, three terminal modules which may be hard wired into the low voltage distribution system at or near the low voltage fuse block 52, or they may be plug-in modules enabling out-of-circuit testing and replacement as a vehicle service procedure. Discrete electrical components may be combined into the module, or the components may be combined together as taught for example by the Thomas et al. U.S. Patent No. 6,518,731 already incorporated by reference hereinabove.

Having thus described preferred embodiments of the invention, it will now be appreciated that the objects of the invention have been fully achieved, and it will be understood by those skilled in the art that many changes in construction and widely differing embodiments and applications of the invention will suggest themselves without departing from the spirit and scope of the invention. Therefore, the disclosures and descriptions herein are purely illustrative and are not intended to be in any sense limiting.

## Claims

1. An electrical overvoltage protection circuit (60) in a dual voltage electrical distribution system (10) having a common return path (12), a high voltage energy source (14) supplying energy at a first voltage potential to a first load (42) via a first distribution wire (32), a low voltage energy source (46) supplying energy at a second voltage potential lower than said first voltage potential to a second load (78) via a second distribution wire (72) in physical proximity with the first distribution wire (32), the protection circuit comprising:
a positive temperature coefficient (PTC) current-limiting device (80) in series between said second voltage source (46) and said second distribution wire (72), and
a voltage-limiting circuit element (82) in thermal contact with said PTC current-limiting device (80), connected across said second distribution wire (72) and the common return path (12) and having a voltage limit set to be below said first voltage potential and above said second voltage potential,
whereby when a crossover occurs during which said second distribution wire (72) becomes cross-connected to said first distribution wire (32), said voltage-limiting circuit element (82) conducts a large current and generates heat which is transferred to said PTC current-limiting device (80) thereby aiding said PTC current-limiting device (80) to switch from an untripped state to a tripped state and limiting current flow from the low voltage energy source (46) through the first voltage distribution wire (32) to a nonhazardous level.

2. The electrical overvoltage protection circuit in a dual voltage electrical distribution system set forth in claim 1 wherein said voltage-limiting circuit element (82) comprises a zener diode (82) in thermal contact with said PTC current-limiting device (80), the zener diode (82) having a reverse avalanche breakdown voltage selected to be above said second voltage potential and below said first voltage potential, the zener diode (82) having a cathode electrode connected to said second distribution wire (72), and the zener diode (82) having an anode electrode connected to the common return path (12).

3. The electrical overvoltage protection circuit in a dual voltage electrical distribution system set forth in claim 1 or 2 wherein said PTC current-limiting device (80) comprises a polymeric positive temperature coefficient (PPTC) device.

4. The electrical overvoltage protection circuit in a dual voltage electrical distribution system set forth in any of the preceding claims further comprising a first fuse (22) in series between the first energy source (14) and the first distribution wire (32), whereby when said crossover occurs said voltage limiting circuit element (82) conducts a sufficiently large current to blow the first fuse (22) and thereby disconnect the first distribution wire (32) from the first energy source (14).

5. The electrical overvoltage protection circuit in a dual voltage electrical distribution system set forth in any of the preceding claims further comprising a second fuse (58) in series between said second energy source (46) and said PTC current-limiting device (80).

6. The electrical overvoltage protection circuit in a dual voltage electrical distribution system set forth in claim 5 wherein said PTC current-limiting device (80) and said voltage-limiting circuit element (82) are configured as a circuit module (60).

7. The electrical overvoltage protection circuit in a dual voltage electrical distribution system set forth in claim 6 wherein the circuit module (60) is hard wired in the electrical distribution system.

8. The electrical overvoltage protection circuit in a dual voltage electrical distribution system set forth in claim 6 or 7 wherein the circuit module (60) includes plug-in connectors and is plugged into a socket of the electrical distribution system.

9. The electrical overvoltage protection circuit in a dual voltage electrical distribution system set forth in any of the preceding claims wherein the electrical distribution system is in a motor vehicle and the common return path (12) includes a conductive chassis (12) of the motor vehicle.

10. A module (60) for protecting a dual voltage electrical distribution system from damage resulting from a cross-connection, said distribution system (10) having a common return path (12), a high voltage energy source (14) supplying energy at a first voltage potential to a first load (42) via a first distribution wire (32), and a low voltage energy source (46) supplying energy at a second voltage potential lower than said first voltage potential to a second load (78) via a second distribution wire (72) in physical proximity with the first distribution wire (32), said module (60) comprising an electrical overvoltage protection circuit comprising:
a positive temperature coefficient (PTC) current-limiting device (80) in series between said second voltage source (46) and said second distribution wire (72), and
a voltage-limiting circuit element (82) in thermal contact with said PTC current-limiting device (80), connected across said second distribution wire (72) and the common return path (12) and having a voltage limit set to be below said first voltage potential and above said second voltage potential,
whereby when a crossover occurs during which said second distribution wire (72) becomes cross-connected to said first distribution wire (32), said voltage-limiting circuit element (82) conducts a large current and generates heat which is transferred to said PTC current-limiting device (80) thereby aiding said PTC current-limiting device (80) to switch from an untripped state to a tripped state and limiting current flow from the low voltage energy source (46) through the first voltage distribution wire (32) to a nonhazardous level.
